Europäisches Patentamt

European Patent Office

Office européen des brevets

(19)

(11) Publication number: **0 118 888**

**A1**

(12) # EUROPEAN PATENT APPLICATION

(21) Application number: **84102512.5**

(22) Date of filing: **08.03.84**

(51) Int. Cl.³: **C 02 F 1/52**
**C 02 F 3/34**

(30) Priority: **09.03.83 JP 39821/83**

(43) Date of publication of application:
**19.09.84 Bulletin 84/38**

(84) Designated Contracting States:
**CH DE FR GB LI NL**

(71) Applicant: **Uchimizu, Mamoru**
**11-20, Nishiwaseda 2-chome Shinjuku-ku**
**Tokyo(JP)**

(72) Inventor: **Mamoru, Uchimizu**
**11-20, Nishiwaseda 2-Chome**
**Shinjuku-ku,Tokyo(JP)**

(74) Representative: **Patentanwälte TER MEER - MÜLLER -**
**STEINMEISTER**
**Triftstrasse 4**
**D-8000 München 22(DE)**

(54) **A method of separating organic matter from its aqueous solution.**

(57) A method of separating organic matter from its aqueous
solution, comprises admixing the aqueous solution with a
mixture containing oxidases and metabolic products, or a
mixture containing oxidases and organic compounds
selected from the group consisting of phenols, organic acids,
polysaccharides, amino acids, and mixtures thereof, to form
a chemical and/or biological sludge, allowing remaining
organic matter and the chemical and/or biological sludge to
form an agglomerated product, and separating the agglom-
erated product from the aqueous solution.

# FIG.1

EP 0 118 888 A1

Croydon Printing Company Ltd.

DESCRIPTION

The present invention relates to a method of separating organic matter from its aqueous solution through chemical reactions among soluble organic contents therein. Various separation methods have been employed for this separation purpose, and typical examples are an activated sludge method, a granulation method, a membrane formation tecqnique and a chemical separation method. Either method specified above, however, carries certain disadvantages which may be a high installation cost, a high running cost, and/or deterioration of separated organic matter.

The present invention is directed toward solving the problems pointed out above, and an object of the present invention is to provide an improved method of separating organic matter from its aqueous solution capable of putting into practice in a usual manner irrespective of BODs of the aqueous solution to be treated, thereby eliminating the necessity of providing large-scaled equipments, and also simplifying the operational procedures.

Another object of the present invention is to provide an improved method of separating organic matter from its aqueous solution, capable of improving the recovery of the organic contents therein.

Another object of the present invention is to provide an improved method of separating organic matter from its aqueous solution, capable of operating in an economical and accessible manner.

According to one aspect of the present invention, there may be provided a method of separating organic matter from its aqueous solution which comprises admixing said aqueous solution with a mixture containing oxidases and metabolic products, and thereby developing chemical and /or biological sludge-forming through chemical and/or biological reactions among soluble organic contents therein and a subsequent formation of agglomerated product of remaining organic matter and said chemical and /or biological sludge, thereafter allowing said agglomerated product to separate from said aqueous solution, said products produced throuch metabolism of bacteria which may be aerobic bacteria including zoogloea, or facultative anaerobic bacteria including lactic acid bacteria and bacillus, or alternatively, a bacteria mass in which both aerobic bacteria and facultative anaerobic bacteria specified above co-exist.

According to another aspect of the present invention, there may be provided a method of separating organic matter from its aqueous solution which comprises admixing said aqueous solution with additives, thereby developing chemical and /or biological sludge forming through chemical anda/or biological reactions among soluble organic contents therein and a subsequent formation of an agglomerated product of remaining organic matter and said chemical and /or biological sludge, thereafter allowing said agglomerated product to separate from said aqueous solution, said additives containing oxidases and organic substances showing analogous physical and chemical behaviours against organic matter in an aqueous solution to oxidases and metabolic products, said organic organic substances containing phenols, organic acids, polysaccharides, amino acids, and mixtures thereof, said metabolic products produced through metabolism of bacteria which may be aerobic bacteria including zoogloea, or facultative anaerobic bacteria including lactic acid bacteria and bacillus, or alternatively, a bacteria mass in which both aerobic bacteria and facultative anaerobic bacteria specified above co-exist.

Other objects, features and advantages of the present invention will become more apparent from the following description when taken in connection with the accompanying drawings, which show, for the prupose of illustration only, an example

of the separation system constructed in accordance with the present invention.

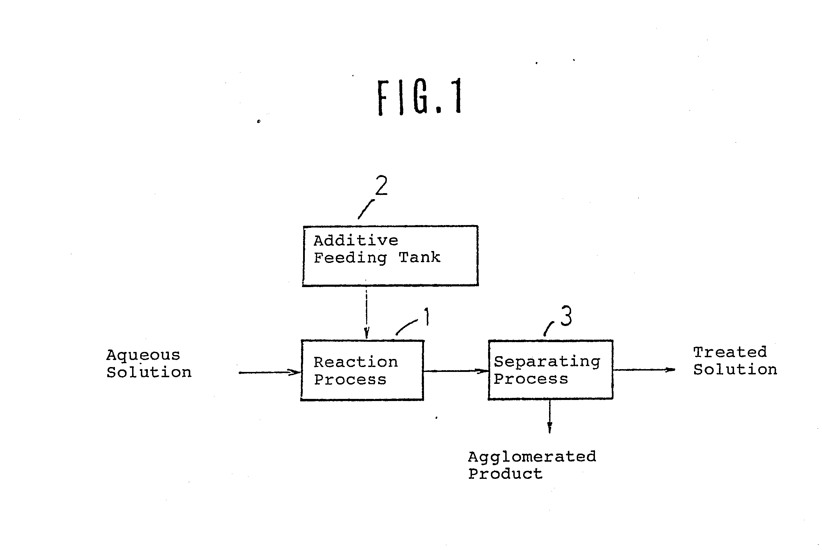

    Fig. 1     is a flowchart showing a separation system according to the present invention.

Now, referring to fig.1, the separation system for carrying out the present invention will be described.

This separation system includes a reaction process 1, an additive feeding tank 2 , and a separating process 3.

A constant amount of an aqueous solution containing organic matter is, continuously or intermittently, introduced into the reaction process 1. At the same time, a mixture containing oxidases and metabolic products is introduced from the additive feeding tank 2 into the reaction process 1 wherein it is admixed

with said aqueous solution under the slow agitation to form a mixture. The mixture is subjected to chemical, physical and/or biological reactions for a relatively short period of time, thereby forming separable solid products.

The mixture containing said solid products is then fed into the separating process 3 to be separated into a liquid portion and a solid portion. The liquid portion is discharged as a treated water while the solid portion is taken out of the system.

The metabolic products to be fed may be those contained in the sludgy matter formed in the course of the biological treatment of an aqueous solution contain ing organic matter, or those contained in the humus precursors.

Bacteria, working at the organic matter in an aqueous solution to produce meta-

bolic products, may be aerobic bacteria including zoogloea, or facultative ana erobic bacteria including lactic acid bacteria and bacillus, or alternatively, a bacteria mass in which both aerobic bacteria and facultative anaerobic bac teria specified above co exist.

The effectiveness of the bacteria mentioned above is derived from the fact that these bacteria, whether they may be aerobic or facultative anaerobic, can pro duce metabolic products, such as phenols, organic acids, polysaccharides, amino acids and /or oxidases. The products are produced through metabolism of bac teria in the condition which enables them to work effectively under the presence of oxygen. It has been found out that the bacterial metabolic products exibit effective physical and chemical behaviours against the soluble organic contents in an aqueous solution.

The term " humus precursors " as used herein means intermediate products pro duced in the course that organic matter is biodegraded into humus. They sub stantially contain phenols, organic acids, polysaccharides, their partly-poly condensed products and/or oxidases, which corresponds to said metabolic pro ducts. The humus-precursors specified above can be easily extracted from in a desired state from lignite, peat, grass peat, or humified matter which is a mixture of humus-precursors and humus.

The metabolic products are usually supplied to the reaction process 1 in the form of sludgy matter or humus-precursors for their accessability, although the effective use of the metabolic products, which are possibly extracted from said sludgy matter and materials containing humus-precursors through such an extract ant as a distilled water, a weak acid and an inorganic solvent, is feasible.

The expected physical and chemical reactions in the reaction process 1 occur first between a mixture containing oxidases and metabolic products and soluble organic contents in an aqueous solution to form a chemical and/or biological sludge, and further allow remaining organic matter and said chemical and/or biological sludge to form an agglomerated product. The physical and chemical reactions include, for example, the neutralization of electric charges ; adsorption and absorption ; molecular conglomeration, such as molecular bond, granulation, condensation, and polymerization ; sludgy-becoming tendency, massed sludge, and any other synergic reactions. The chemical reactions according to the present invention, however, don't include an enzymatic degradation of organic matter. In the former increased are molecular sizes of remaining organic matter, while not increased in the latter.

A period of time for reactions in the reaction process 1 is normally a few minutes, but sometimes it may take more than 100 minutes. If the reactions are continued for an excessively long period of time, and accordingly, the mixture is caused to stay in the reaction process 1 too long, self digestion is likely to occur, thereby resulting in an undesirable increase of soluble organic content. Also heating up the mixture to be at a temperature of 50°C or less helps developing the reactions. These have been experimentally ascertained.

The use of additives containing oxidases and specific organic compounds, which show analogous physical and chemical behaviours against the organic matter in an aqueous solution to the bacterial metabolic products specified previously, is also feasible, as inferable from the foregoing description.

The specific organic compounds are a mixture of compounds selected from the group consisting of phnols, organic acids, polysaccharides, amino acids, and mixtures thereof.

The control of pH value in the range 5.0 to 7.5 and the moderate agitation of the reaction mixture in the reaction process 1 remarkably develop the reactions between the soluble organic contents in the aqueous solution and a mixture containing oxidases and metabolic products, accordingly leading to the fixation of the substances which give out putrid smell when they are free.

In the separating process 3, said agglomerated product is allowed to separate from said aqueous solution. The liquid portion after separation is discharged out of the system as a treated water. The separation can be carried out by a solid liquid separator of all types, such as a precipitator, a continuous filter of rotary-drum type and a dehydrator.

The experiments indicate that a mixture containing oxidases and metabolic products function as an initiator to progress the reactions among soluble organic contents in an aqueous solution to be treated. and accordingly, only a slight amount of said mixture is required to be added thereto. The experiments also indicate that the mixture concentration less than 200 ppm in the aqueous solution, slightly changeable according to the concentration of the soluble organic contents present therein, normally gives satisfactory results.

To exemplify the present invention for better understanding, the following example, when applied to the sewage treatment, is given.

Arrangements :

The sewage :   A human urine. The COD ( Chemical Oxygen Demand ) was 5700 ppm. The amount of supply to the reaction process was 10 $m^3$/day for 10 hours' operation a day. The pH value of the sewage was adjusted to be about 6.5 under the presence of aeration, folowed by agitation, in the sewage storing tank.

The metabolic products :

A filtrate, comprising about 2% of humus precursors containing oxidases, separated by a high pressure filter from a mixture con sisting equally of water and humified matter. The volumetrric feed rate to the reaction process was 0.1 m³/day.

The reaction process :

A moderate agitation was performed. The residence time of the mixture was 1 minute.

The separating process :

A continuous filter of rotary-drum type was employed. A filtrate was further filtered by means of a precoat filter with diatomaceous earth. The COD at the outlet of this process was 150 ppm.

The secondary process :

An adsorption treatment by active carbon was performed. The COD of the effluent was less than 10 ppm.

Under the arrangements mentioned above, a sewage treatment in accordance with the present invention was carried out.

The total amount of air required for effecting the aeration was 600 m³ per day, and the total aeration power required was 7.5 KwH ( 0.75 Kw ( installation power ) x 10 hours) .

For comparison, the sewage of the same conditions was treated under the con ventional activated sludge method. The amount of air required for aeration was 4875m³/day for 60m³/BOD Kg, and the required aeration power was 132 KwH ( 5.5 Kw ( installation power ) x 24 hours) .

As evident from the foregoing description, according to the present invention the aeration power can be considerably reduced without sacrificing the effectiveness of sewage treatment, as contrast to the conventional activated sludge method. This assures the reduced cost. In addition, it is no longer necessary to dilute the sewage to be treated previously if it is highly condensed. This eliminates the necessity of providing the equipments for storing and circulating the diluting water, whereby the sewage treatment can be carried out even in a relatively restricted area or site. Accordingly, it is assured that the sewage treatment can be practised in an economical and accessible manner.

The reduced aeration also prevents soluble organic contents in the sewage from decomposing by oxidization, thereby recovering organic matter present therein effectively, and at the same time increasing the organic contents in the sludge to be finally separated.

## CLAIMS

1. A method of separating organic matter from its aqueous solution, c h a r a
c t e r i z e d by the following steps :

admixing said aqueous solution with a mixture containing oxidases and
metabolic products, to form a chemical and/or biological sludge, said products
produced through the metabolism of bacteria selected from the group consisting
of aerobic bacteria, facultative anaerobic bacteria, and a mixture thereof,

allowing remaining organic matter and said chemical and/or biological
sludge to form an agglomerated product, and

separating said agglomerated product from said aqueous solution.

2. A method as set forth in claim 1, c h a r a c t e r i z e d in that the
the metabolic products are those contained in the sludgy matter formed in the
course of the biological treatment of an aqueous solution containing organic
matter.

3. A method as set forth in claim 1, c h a r a c t e r i z e d in that the
metabolic products are those contained in humus-precursors.

4. A method as set forth in claim 3, c h a r a c t e r i z e d in that the
humus-precursors are those contained in the humified matter.

5. A method as set forth in claim 3, c h a r a c t e r i z e d in that the
humus-precursors are those contained in lignite, peat, or grass peat.

6. A method of separating organic matter from its aqueous solution,
c h a r a c t e r i z e d  by the following steps :

admixing said aqueous solution with a mixture containing oxidases and
compounds selected from the group consisting of phenols, organic acids, polysaccharides, amino acids, and mixtures thereof, to form a chemical and/or biological sludge,

allowing remaining organic matter and said chemical and/or biological sludge to form an agglomerated product, and

separating said agglomerated product from said aqueous solution.

7. A method as set forth in claim 6, c h a r a c t e r i z e d  in that the compounds are those contained in the sludgy matter formed in the course of the biological treatment of an aqueous solution containing organic matter.

8. A method as set forth in claim 6, c h a r a c t e r i z e d  in that the the compounds are those contained in humus-precursors.

9. A method as set forth in claim 8, c h a r a c t e r i z e d  in that the humus-precursors are those contained in humified matter.

10. A method as set forth in claim 8, c h a r a c t e r i z e d  in that the humus-precursors are those contained in lignite, peat, or grass peat.

# FIG.1

Additive
Feeding Tank — 2

Aqueous
Solution → Reaction
Process — 1

→ Separating
Process — 3

→ Treated
Solution

↓

Agglomerated
Product

0118888

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 573 429 (SIMON-HARTLEY LTD.) <br> * Page 2, claims 1-4; page 1, lines 47-88 * | 1,2,6, 7 | C 02 F 1/52 <br> C 02 F 3/34 |
| X | US-A-3 763 039 (HOUDAILLE INDUSTRIES) <br> * Page 1, abstract; figure 7; column 10, lines 16-59 * | 1,2,6, 7 | |
| X | JAPANESE PATENTS REPORT, vol. 78, no. 5, examined 26th January - 1st February 1978, Section Ch: Chemical, Chemical Engineering-p.3, J7-J, Derwent Publ. Ltd., London, GB & JP - A - 80 02835 (S.K. KURIN K.K.) 01-02-1978 <br> * Whole document * | 1,3-6, 8-10 | |
| | | | **TECHNICAL FIELDS SEARCHED (Int. Cl. ³)** |
| X | DE-C- 87 417 (O. SCHMIDT) <br> * Page 1, left-hand column, last paragraph; page 2, claim * | 1,3-6, 8-10 | C 02 F |
| A | EP-A-0 013 217 (RHONE-POULENC) <br> * Page 19, claim 1 * | 1,2,6, 7 | |

--- -/-

The present search report has been drawn up for all claims

| Place of search | Date of completion of the search | Examiner |
|---|---|---|
| THE HAGUE | 08-06-1984 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

# EUROPEAN SEARCH REPORT

European Patent Office

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. 3) |
|---|---|---|---|
| A | US-A-3 801 499 (E. LUCK)<br><br>* Column 4, line 65 - column 5, line 3 * | 1,2,6,7 | |
| A | DE-B-1 278 958 (A. SCHREIBER)<br><br>* Claims 1,2 * | 1,2,6,7 | |

TECHNICAL FIELDS SEARCHED (Int. Cl. 3)

The present search report has been drawn up for all claims

| Place of search | Date of completion of the search | Examiner |
|---|---|---|
| THE HAGUE | 08-06-1984 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82